# EUROPEAN PATENT APPLICATION

(11) **EP 4 644 731 A1**
(43) Date of publication of application: **05.11.2025**
(21) Application number: 22970075.2
(22) Date of filing: 27.12.2022
(51) Int. Cl.: F16H 49/00

(54) **MOTION DIRECTION CONVERTER**

(71) Applicant: Copernicus LLC, Tokyo 102-0073 (JP)
(72) Inventor: TSUMURA, Shinichi, Tokyo 102-0074 (JP)
(74) Representative: Müller-Boré & Partner Patentanwälte PartG mbB
(86) International application number: PCT/JP2022/048290
(87) International publication number: WO 2024/142283

(57) **Abstract**

The motion direction converter includes a rotor, a plurality of segmented wall members arranged along the outer circumference of the rotor, and a linearly movable member that moves toward and away from the rotor. A first magnetic member is provided on the outer circumference, a second magnetic member is provided on the segmented wall member and a third magnetic member is provided on a part of the linearly movable member facing the rotor, and these magnetic members are of the same polarity. The distance between the first and second magnetic members and the distance between the first and third magnetic members are formed to increase from the upstream to the downstream in the rotating direction. When the first magnetic member faces the third magnetic member as the rotor rotates, the linearly movable member moves forward towards the rotor, and when the first magnetic member moves from the third magnetic member to the downstream in the rotating direction as the rotor rotates further, the linearly movable member moves back away from the rotor.

## Description

### TECHNICAL FIELD

This invention relates to a motion direction converter.

### BACKGROUND ART

Patent document 1 discloses "A mechanism to convert rotational motion into linear motion wherein a straight round bar of substantially nonmagnetic material with a magnetic strip spirally wound near the outer surface is inserted into a nut piece with a round hole in which a strip of permanent magnet of substantially the same width as the strip of magnetic material is affixed near the inner surface in the form of a spiral of the same pitch as the spiral such that, under a condition that they do not refuse the relative linear movement of the straight round bar and the nut piece in the axial direction of the straight round bar at least while turning in accordance with the spiral, the magnetic strip of the straight round bar and the strip of the permanent magnet of the nut piece are close together so that they overlap, and when either the straight round bar or the nut piece is rotated about its axis, one of the other is constrained not to follow this rotation, and a guide to move the straight round bar and the nut piece relatively linearly is provided".

### CITATION LIST

### PATENT LITERATURE

[Patent Document 1] JP H9-79341A

### SUMMARY OF INVENTION

### TECHNICAL PROBLEM

The mechanism of Patent Document 1 can convert rotational motion into linear motion but cannot convert linear motion into rotational motion.

This invention was made in light of the above problem and the current situation, and aims to provide a motion direction converter that converts linear motion into rotational motion with a simple structure.

### SOLUTION TO PROBLEM

In order to solve the above problem, this invention has the structure described in the scope of the claims. As an example, this invention includes: a rotation shaft and a rotor that rotates around the rotation shaft; a wall member arranged on the outer circumference along the rotating direction of the rotor; and a linearly movable member that moves toward and away from the rotor, wherein the wall member includes a plurality of segmented wall members, the plurality of segmented wall members are arranged at intervals along the rotating direction of the rotor, the linearly movable member moving back and forth between adjacent segmented wall members of the plurality of segmented wall members toward the rotor, the rotor is provided with a first magnetic member on the outer circumference, the plurality of segmented wall members are provided with a second magnetic member, a part of the liner moving member facing the rotor is provided with a third magnetic member, the first magnetic member, the second magnetic member, and the third magnetic member are of the same polarity, the distance between the first magnetic member and the second magnetic member is formed to increase from the upstream to the downstream in the rotating direction, the distance between the first magnetic member and the third magnetic member is formed to increase from the upstream to the downstream in the rotating direction, and when the first magnetic member faces the third magnetic member as the rotor rotates, the linearly movable member moves forward towards the rotor, and when the first magnetic member moves from the third magnetic member to the downstream in the rotating direction as the rotor rotates further, the linearly movable member moves back away from the rotor.

### ADVANTAGEOUS EFFECTS OF INVENTION

The present invention can provide a motion direction converter that converts linear motion into rotational motion with a simple structure. The objective, structure, and effect of the present invention other than those described above are clarified in the following embodiments.

### BRIEF DESCRIPTION OF DRAWINGS

FIG. 1 is an illustrative front view of the motion direction converter of this embodiment.
FIG. 2 is an illustrative side view of the motion direction converter of this embodiment.
FIG. 3 is a perspective view of the switch mechanism.
FIG. 4 is an illustrative side view of the switch mechanism.
FIG. 5 is a diagram showing the electrical system of the switch mechanism and battery.
FIG. 6 is an explanatory view of the timing of the back and forth movement of the rod.
FIG. 7 shows variations in the shape of the rotor and the number of the linearly movable members.

### DESCRIPTION OF EMBODIMENTS

The embodiment of the invention is explained below, with reference to the drawings. The same symbols are used for the same components throughout the drawings, and redundant explanations are omitted.

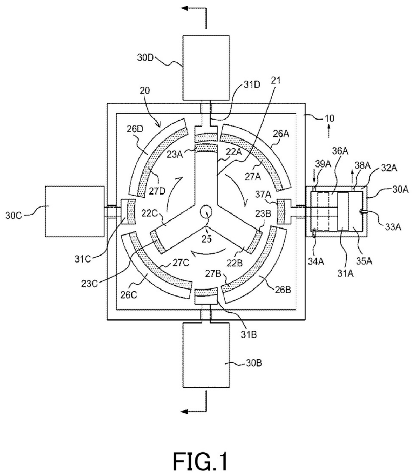

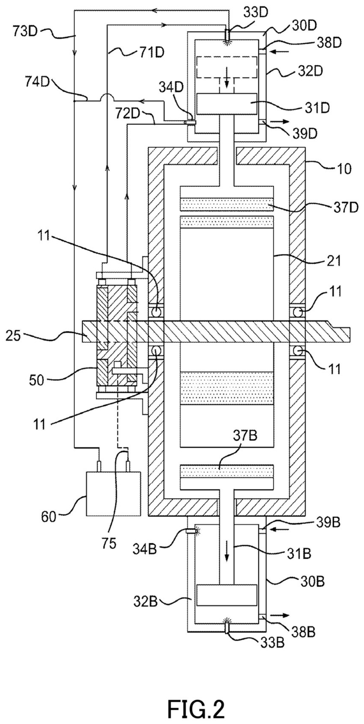

FIG. 1 is an illustrative front view of the motion direction converter of this embodiment. FIG. 2 is an illustrative side view of the motion direction converter of this embodiment.

The motion direction converter 1 includes a housing 10, a rotation mechanism 20, and a first linearly movable member 30A, a second linearly movable member 30B, a third linearly movable member 30C, and a fourth linearly movable member 30D.

The housing 10 houses the rotation mechanism 20.

The rotation mechanism 20 includes a rotor 21 and a rotation shaft 25. The rotation shaft 25 is supported by the housing 10 in a rotatable manner by means of a bearing 11 (see FIG. 2). The rotor 21 rotates around the rotation shaft 25.

The rotor 21 is provided with a first blade 22A, a second blade 22B, and a third blade 22C.

The first blade 22A is provided with a first magnetic member 23A on its outer circumference. Similarly, the second blade 22B is provided with the first magnetic member 23B on its outer circumference, and the third blade 22C is provided with the first magnetic member 23C on its outer circumference.

A first segmented wall member 26A, a second segmented wall member 26B, a third segmented wall member 26C, and a fourth segmented wall member 26D are arranged to surround the rotor 21, with a gap so that they do not come into contact with the rotor 21, along the outer circumference of the rotor 21.

A second magnetic member 27A is provided on the surface of the first segmented wall member 26A facing the rotor 21. Similarly, a second magnetic member 27B is provided on the surface of the second segmented wall member 26B facing the rotor 21, a second magnetic member 27C is provided on the surface of the third segmented wall member 26C facing the rotor 21, and a the second magnetic member 27D is provided on the surface of the fourth segmented wall member 26D facing the rotor 21.

FIG. 1 shows a plane that includes the rotation surface of the rotor. The second magnetic members 27A, 27B, 27C, and 27D are formed into a quadratic curve shape within the plane that includes the rotation surface of the rotor 21.

The motion direction converter 1 includes the first linearly movable member 30A, the second linearly movable member 30B, the third linearly movable member 30C, and the fourth linearly movable member 30D. In this embodiment, the linearly movable member uses a piston that operates with an internal combustion engine such as a gasoline engine or diesel engine, but it can also be a hydraulic piston as long as it can respond to the response speed of the rotor 21.

The first linearly movable member 30A is arranged so that the tip of a rod 31A moves back and forth between the first segmented wall member 26A and the second segmented wall member 26B towards the rotor 21. The second linearly movable member 30B is arranged so that the tip of a rod 31B moves back and forth between the second segmented wall member 26B and the third segmented wall member 26C towards the rotor 21. The third linearly movable member 30C is arranged so that the tip of a rod 31C moves back and forth between the third segmented wall member 26C and the fourth segmented wall member 26D towards the rotor 21. The fourth linearly movable member 30D is arranged so that the tip of a rod 31D moves back and forth between the fourth segmented wall member 26D and the first segmented wall member 26A towards the rotor 21.

The first linearly movable member 30A is provided with the rod 31A, a cylinder 32A, a first spark plug 33A, and a second spark plug 34A.

A third magnetic member 37A is provided at the tip of the rod 31A, i.e., at the part facing the rotor 21. In the first linearly movable member 30A, in the status where the rod 31A has advanced the farthest towards the rotor 21, that is, in the status where the rod 31A has been pushed out the farthest from the cylinder 32A, the third magnetic member 37A provided at the tip of the rod 31A moves to a position where it is not contact with, that is, non-contact with the rotor 21.

The first spark plug 33A is provided in the first storage chamber 35A in the cylinder 32A. The first storage chamber 35A is provided with a intake/exhaust valve 38A. The second spark plug 34A is provided in the second storage chamber 36A in the cylinder 32A. The second storage chamber 36A is also provided with a intake/exhaust valve 39A. A mixture of combustible gas and air flows in via the intake/exhaust valves 38A and 39A, and the combustion gas is exhausted.

When the intake/exhaust valve 38A is opened to supply air and the first spark plug 33A ignites, combustion occurs, the intake/exhaust valve 39A is opened to exhaust air, and the rod 31A moves toward the rotor 21. When the intake/exhaust valve 39A is opened to supply air and the second spark plug 34A ignites, combustion occurs, the intake/exhaust valve 38A is opened to exhaust air, and the rod 31A moves away from the rotor 21. The second linearly movable member 30B, the third linearly movable member 30C, and the fourth linearly movable member 30D have the same structure as the first linearly movable member 30A, so the redundant explanation will be omitted.

The first magnetic members 23A, 23B, and 23C, the second magnetic members 27A, 27B, 27C, and 27D, and the third magnetic members 37A, 37B, 37C, and 37D are all of the same polarity. The first magnetic members 23A, 23B, and 23C, and the second magnetic members 27A, 27B, 27C, and 27D may be constructed using electromagnets, but it is preferable to use permanent magnets such as neodymium magnets to avoid the complexity of wiring. The third magnetic members 37A, 37B, 37C, and 37D may also be electromagnets, but it is preferable to use permanent magnets from the perspective of power saving.

The distance between the third magnetic members 37A, 37B, 37C, and 37D and the first magnetic members 23A, 23B, and 23C that face them is formed to increase from the upstream to the downstream in the rotating direction. Similarly, the distance between the second magnetic members 27A, 27B, 27C, and 27D and the first magnetic members 23A, 23B, and 23C that face them is formed to increase from the upstream to the downstream in the rotating direction. As a method for achieving this, the first magnetic members 23A, 23B, and 23C, the second magnetic members 27A, 27B, 27C, and 27D, and the third magnetic members 37A, 37B, 37C, and 37D are formed into a quadratic curve shape curved within the plane that includes the rotation surface of the rotor 21.

As shown in FIG. 2, the motion direction converter 1 is equipped with a switch mechanism 50 and a battery 60. The switch mechanism 50 switches the rotating direction of the first linearly movable member 30A, the second linearly movable member 30B, the third linearly movable member 30C, and the fourth linearly movable member 30D to the advancing direction or the retreating direction.

The switch mechanism 50 shares the rotation shaft 25 with the rotor 21. This synchronizes the rotational motion of the rotation shaft 25 with the switching operation of the switch mechanism 50.

The switch mechanism 50 is powered by the battery 60 via the power line 75. In the A-A' cross-sectional view of FIG. 2, the contact point between the power line 75 and the switch mechanism 50 is not included, but for the sake of convenience in explanation, the contact point between the power line 75 and the switch mechanism 50 is illustrated with a dotted line.

In addition, the first spark plug 33D of the fourth linearly movable member 30D is connected to the brush BR4 of the switch mechanism 50 via a control line 71D, and is connected to the battery 60 via a control line 73D.

In addition, the second spark plug 34D of the fourth linearly movable member 30D is connected to the brush BR8 of the switch mechanism 50 via a control line 72D, and is connected to the battery 60 via a control line 74D.

The first linearly movable member 30A, the second linearly movable member 30B, and the third linearly movable member 30C have the same structure as the fourth linearly movable member 30D, so their descriptions will be omitted.

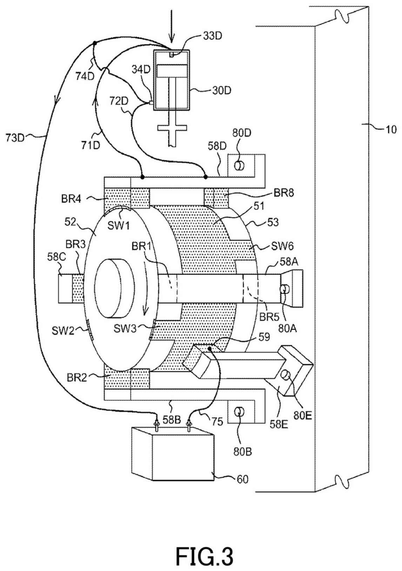

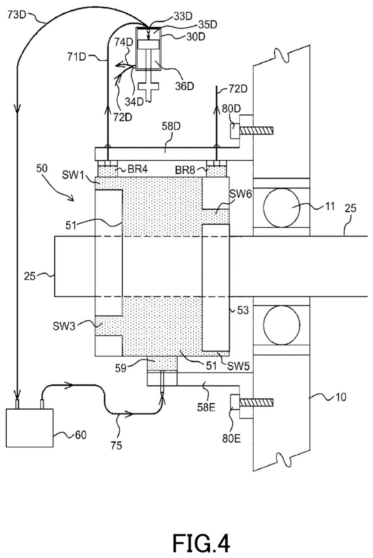

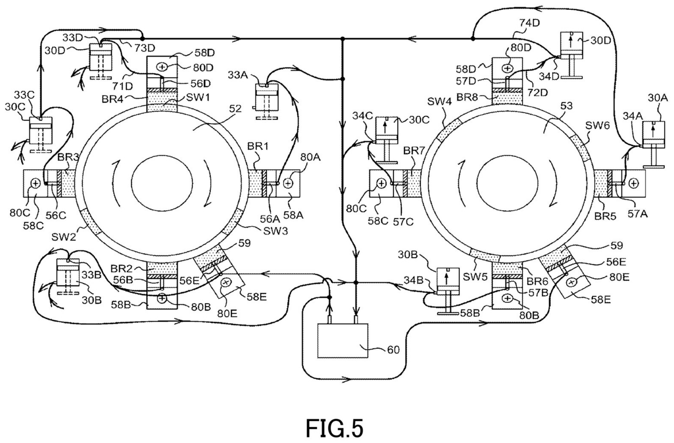

FIG. 3 is a perspective view of the switch mechanism. FIG. 4 is an illustrative side view of the switch mechanism. FIG. 5 is a diagram showing the electrical system of the switch mechanism and battery.

As shown in FIG. 3, the switch mechanism 50 has a disk 51 made of an insulator. Recesses are formed in the center portion and on both sides of the circumference of the disk 51, and conductors such as copper plates are embedded in the recesses.

Therefore, on a first circumferential surface edge 52 of the disk 51, conductors and insulators are arranged alternately in the circumferential direction. The exposed portions of the conductors on the first circumferential surface edge 52 correspond to ignition switches SW1, SW2, and SW3. The ignition switches SW1 to SW3 are switches for igniting spark plugs 33A to 33D (see FIG. 5).

Similarly, on a second circumferential surface edge 53, conductors and insulators are arranged alternately in the direction of the circumference. The exposed portions of the conductors on the second circumferential surface edge 53 correspond to ignition switches SW4, SW5, and SW6. The ignition switches SW4 to SW6 are switches for igniting the spark plugs 34A to 34D (see FIG. 5).

The symbols 56A to 56E and 57A to 57E refers to the electrodes.

The disk 51 rotates together with the rotation shaft 25 (see FIG. 4). As a result, it rotates in synchronization with the rotational motion of the rotor 21.

The number and interval (circumferential angle) of the ignition switches SW1 to SW3 and SW4 to SW6 are the same as the number and interval (circumferential angle) of the blades of the rotor 21.

The power supply brushes 59 are made of conductors and are supported by the support 58E so as to be in contact with the disk 51. The support 58E is fixed to the outer surface of the housing 10 by a bolt 80E.

The supports 58A to 58D are arranged in accordance with the number and interval of the linearly movable members. Each of the supports 58A to 58D is fixed to the outer surface of the housing 10 by bolts 80A, 80B, (80C not shown), and 80D.

The supports 58A to 58D are each provided with a brush BR1 to BR4. The brushes BR1 to BR4 are made of conductors and supply electricity to the ignition switches SW1 to SW3 when they come into contact with each other. When the disk 51 rotates, each of the BR1 to BR4 successively comes into contact with each of the ignition switches SW1 to SW3 to generate ignition signals by the electrical conduction.

Furthermore, the supports 58A to 58D are each provided with the brushes BR5 to BR8. The brushes BR5 to BR8 are made of conductors and supply electricity to the ignition switches SW4 to SW6 when they come into contact with each other. When the disk 51 rotates, each of the BR5 to BR8 successively comes into contact with each of the ignition switches SW4 to SW6 to generate ignition signals by the electrical conduction.

The fourth linearly movable member 30D will be described as an example. As shown in FIG. 4, when the rotor 21 and the disk 51 rotate synchronously with the rotation shaft 25, the switch SW1 contacts the brush BR4 and electricity is supplied to generate an ignition signal. This ignition signal is output to the first spark plug 33D via the control line 71D, and the first spark plug 33D ignites in response to the ignition signal. As a result, the combustible gas in the first storage chamber 35D is ignited and the rod 31D is pushed towards the rotor 21.

Furthermore, when the rotor 21 and the disk 51 rotate synchronously with the rotation shaft 25, the SW4 contacts the brush BR8 and electricity is supplied to generate an ignition signal. This ignition signal is output to the second spark plug 34D via the control line 72D, and the second spark plug 34D ignites in response to the ignition signal. As a result, the combustible gas inside in the second storage chamber 36D is ignited and the rod 31D moves back in the direction away from the rotor 21.

As shown in FIG. 5, the first spark plug 33A of the first linearly movable member 30A is connected to the brush BR1 via a control line, and the second spark plug 34A is connected to the brush BR5 via a control line. The first spark plug 33B of the second linearly movable member 30B is connected to the brush BR2 via a control line, and the second spark plug 34A is connected to the brush BR6 via a control line. The first spark plug 33C of the third linearly movable member 30C is connected to the brush BR3 via a control line, and the second spark plug 34C is connected to the brush BR7 via a control line.

In FIG. 5, the power supply brush 59 shown together with the first circumferential surface edge 52 and the power supply brush 59 shown together with the second circumferential surface edge 53 indicate the same component.

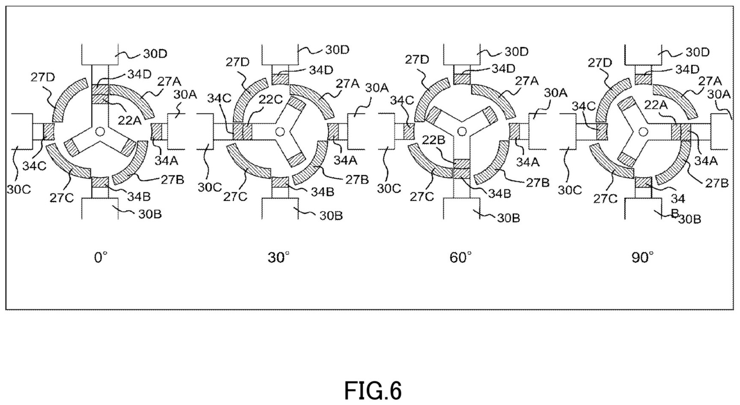

FIG. 6 is an explanatory view of the timing of the back and forth movement of the rod.

In the motion direction converter 1 shown in FIG.5, the first magnetic members 23A, 23B, and 23C are provided at 120° intervals and the third magnetic members 37A, 37B, 37C, and 37D are provided at 90° intervals.

When the rod 31D of the fourth linearly movable member 30D moves while the first magnetic member 23A is facing directly upwards (0°) as shown in FIG. 5, the third magnetic member 37D approaches the first magnetic member 23A to generate a repulsive force. At this time, since the distance between the first magnetic member 23A and the third magnetic member 37D is formed to increase from the upstream to the downstream in the rotating direction, the repulsive force becomes smaller from the upstream to the downstream. Therefore, the rotor 21 rotates in the direction of the smaller repulsive force, that is, to the downstream in the rotating direction, and the first magnetic member 23A faces the second magnetic member 27A. In this status, the rod 31D moves away from the rotor 21 and retreats into the inside of the cylinder 32D.

Although a repulsive force also occurs between the first magnetic member 23A and the second magnetic member 27A, the distance between the first magnetic member 23A and the second magnetic member 27A is formed to increase from the upstream to the downstream in the rotating direction, so the repulsive force decreases in the downstream direction. Therefore, the rotor 21 rotates in the direction of the smaller repulsive force, that is, to the downstream in the rotating direction, and the rotation angle of the first magnetic member 23A reaches 30°.

When the rotation angle of the first magnetic member 23A reaches 30°, the first magnetic member 23C reaches a position facing the third linearly movable member 30C. When the rod 31C of the third linearly movable member 30C moves forward, the third magnetic member 37C approaches the first magnetic member 23C to generate a repulsive force, causing the rotor 21 to rotate further to the downstream in the rotating direction. The first magnetic member 23C then faces the second magnetic member 27D, and the repulsive force between the two causes it to rotate further to the downstream in the rotating direction. After that, the rod 31C moves away from the rotor 21 and retreats into the inside of the cylinder 32C.

As the rotor 21 rotates, when the rotation angle of the first magnetic member 23A reaches 60°, the first magnetic member 23B reaches a position facing the second linearly movable member 30B. When the rod 31B of the second linearly movable member 30B moves forward, the third magnetic member 37B approaches the first magnetic member 23B to generate a repulsive force, causing the rotor 21 to rotate further to the downstream in the rotating direction. The first magnetic member 23B then faces the second magnetic member 27C, and the repulsive force between the two causes it to rotate further to the downstream in the rotating direction. After that, the rod 31B moves away from the rotor 21 and retreats into the inside of the cylinder 32B.

As the rotor 21 rotates further, when the rotation angle of the first magnetic member 23A reaches 90°, the first magnetic member 23A reaches a position facing the first linearly movable member 30A. At this point, the rod 31A of the first linearly movable member 30A moves forward. This causes the third magnetic member 37A to approach the first magnetic member 23A to generate a repulsive force, causing the rotor 21 to rotate to the downstream in the rotating direction. The first magnetic member 23A then faces the second magnetic member 27B, and the repulsive force between the two causes is to rotate further to the downstream in the rotating direction. After that, the rod 31A moves away from the rotor 21 and retreats into the inside of the cylinder 32A.

Thus, in the rotor 21, by making the angle intervals in the rotating direction of the first magnetic members 23A, 23B, and 23C different from the angle intervals in the rotating direction of the third magnetic members 37A, 37B, 37C, and 37D, it is possible to prevent two or more of the first magnetic members 23A, 23B, and 23C from simultaneously facing the third magnetic members 37A, 37B, 37C, and 37D, thereby preventing the repulsive force acting on the other first magnetic members 23A, 23B, and 23C from acting as a brake on the rotational motion.

Furthermore, by widening the angle interval of the rotating direction of the first magnetic members 23A, 23B, and 23C compared to the angle interval of the rotating direction of the third magnetic members 37A, 37B, 37C, and 37D, when one first magnetic member is rotated by a repulsive force from one third magnetic member, the repulsive force between the one first magnetic member and the one third magnetic member acts before the repulsive force with the other adjacent third magnetic member acts, so the rotation speed of the rotor can be boosted before the repulsive force with the other adjacent third magnetic member acts. Therefore, the rotation speed of the rotor can be maintained at high speed.

FIG. 6 shows variations in the shape of the rotor and the number of the linearly movable members.

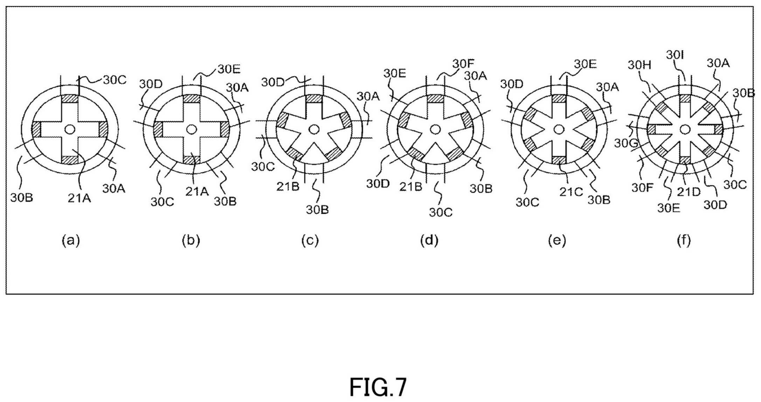

FIG. 7(a) shows a motion direction converter that has three (first to third) linearly movable members 30A, 30B, and 30C for a rotor 21A with four blades.

FIG. 7(b) shows a motion direction converter that has five (first to fifth) linearly movable members 30A, 30B, 30C, 30D, and 30E for a rotor 21A with four blades.

FIG. 7(c) shows a motion direction converter that has four (first to fourth) linearly movable members 30A, 30B, 30C, and 30D for a rotor 21B with five blades.

FIG. 7(d) shows a motion direction converter that has six (first to sixth) linearly movable members 30A, 30B, 30C, 30D, 30E, and 30F for a rotor 21B with five blades.

FIG. 7(e) shows a motion direction converter that has five (first to fifth) linearly movable members 30A, 30B, 30C, 30D, and 30E for a rotor 21C with six blades.

FIG. 7(f) shows a motion direction converter that has nine (first to ninth) linearly movable members 30A, 30B, 30C, 30D, 30E, 30F, 30G, 30H, and 30I for a rotor 21D with eight blades.

As shown above, various combinations of the number of blades on the rotor and the linearly movable members are possible and are not limited to the embodiments described above. In addition, the number of blades and the number of the linearly movable members may be increased according to the size and application of the motion direction converter.

The motion direction converter of this invention can convert linear motion into rotational motion with a simple structure. In addition, linear motion can be converted to rotational motion without contact, eliminating component wear at the point of contact between the linear and rotating directions and the loss of kinetic energy during conversion. The converted rotational motion can also be used for power generation technology. In conventional power generation using high-pressure steam, there are concerns about the environmental impact of increased waste heat and greenhouse gas emissions; compared to this, power generation using the motion converter of this invention can reduce the environmental impact of power generation, and it is expected to contribute to "7. Affordable and clean energy" of the Sustainable Development Goals (SDGs) advocated by the United Nations.

### REFERENCE SIGNS LIST

1: motion direction converter
10: housing
11: bearing
20: rotation mechanism
21: rotor
21A: rotor
21B: rotor
21C: rotor
21D: rotor
22A: first blade
22B: second blade
22C: third blade
23A: first magnetic member
23B: first magnetic member
23C: first magnetic member
25: rotation shaft
26A: first segmented wall member
26B: second segmented wall member
26C: third segmented wall member
26D: fourth segmented wall member
27A: second magnetic member
27B: second magnetic member
27C: second magnetic member
27D: second magnetic member
30A: first linearly movable member
30B: second linearly movable member
30C: third linearly movable member
30D: fourth linearly movable member
30E: fifth linearly movable member
30F: sixth linearly movable member
30G: seventh linearly movable member
30H: eighth linearly movable member
30I: ninth linearly movable member
31A: rod
31B: rod
31C: rod
31D: rod
32A: cylinder
32B: cylinder
32C: cylinder
32D: cylinder
33A: first spark plug
33B: first spark plug
33C: first spark plug
33D: first spark plug
34A: second spark plug
34B: second spark plug
34C: second spark plug
34D: second spark plug
35A: first storage chamber
35D: first storage chamber
36A: second storage chamber
36D: second storage chamber
37: third magnetic member
37A: third magnetic member
37B: third magnetic member
37C: third magnetic member
37D: third magnetic member
50: switch mechanism
51: disk
52: first circumferential surface edge
53: second circumferential surface edge
56A: electrode
56B: electrode
56C: electrode
56D: electrode
56E: electrode
57A: electrode
57B: electrode
57C: electrode
57D: electrode
57E: electrode
58A: support
58B: support
58C: support
58D: support
58E: support
59: power supply brush
60: battery
71D: control line
72D: control line
73D: control line
74D: control line
75: power line
80A: bolt
80B: bolt
80E: bolt
BR1: brush
BR2: brush
BR3: brush
BR4: brush
BR5: brush
BR6: brush
BR7: brush
BR8: brush
SW1: ignition switch
SW2: ignition switch
SW3: ignition switch
SW4: ignition switch
SW5: ignition switch
SW6: ignition switch

## Claims

1. A motion direction converter, comprising:
a rotation shaft and a rotor that rotates around the rotation shaft;
a wall member arranged on the outer circumference along the rotating direction of the rotor; and
a linearly movable member that moves toward and away from the rotor, wherein
the wall member includes a plurality of segmented wall members,
the plurality of segmented wall members are arranged at intervals along the rotating direction of the rotor,
the linearly movable member moving back and forth between adjacent segmented wall members of the plurality of segmented wall members toward the rotor,
the rotor is provided with a first magnetic member on the outer circumference,
the plurality of segmented wall members are provided with a second magnetic member,
a part of the liner moving member facing the rotor is provided with a third magnetic member,
the first magnetic member, the second magnetic member, and the third magnetic member are of the same polarity,
the distance between the first magnetic member and the second magnetic member is formed to increase from the upstream to the downstream in the rotating direction,
the distance between the first magnetic member and the third magnetic member is formed to increase from the upstream to the downstream in the rotating direction, and
when the first magnetic member faces the third magnetic member as the rotor rotates, the linearly movable member moves forward towards the rotor, and when the first magnetic member moves from the third magnetic member to the downstream in the rotating direction as the rotor rotates further, the linearly movable member moves back away from the rotor.

2. The motion direction converter according to claim 1, wherein
the second magnetic member is formed into a curved surface that is a quadratic curve shape curved within a plane that includes the rotation surface of the rotor.

3. The motion direction converter according to claim 1 or 2, comprising:
the same number of the linearly movable members as the segmented wall members, and
a different number of the first magnetic members from the second magnetic members and the third magnetic members.

4. The motion direction converter according to claim 1, wherein
in the status where the linearly movable member has advanced the most towards the rotor, the linearly movable member moves to a position out of contact with the rotor.
